(19) **Europäisches Patentamt**

**European Patent Office**

**Office européen des brevets**

(11) **EP 1 311 078 B1**

(12) **FASCICULE DE BREVET EUROPEEN**

(45) Date de publication et mention
de la délivrance du brevet:
**28.12.2005  Bulletin 2005/52**

(51) Int Cl.⁷: **H04B 10/08**, H04L 1/20,
H04L 25/02

(21) Numéro de dépôt: **02292496.3**

(22) Date de dépôt: **10.10.2002**

(54) **Procédé de mesure du taux d'erreur d'un système de transmission optique et dispositif pour la mise en oeuvre de ce procédé**

Fehlerratenmessungsverfahren in einem optischen Übertragungssystem und Vorrichtung zur Ausführung des Verfahrens

Optical transmission system error rate measurement method and apparatus for carrying out this method

(84) Etats contractants désignés:
**AT BE BG CH CY CZ DE DK EE ES FI FR GB GR IE IT LI LU MC NL PT SE SK TR**

(30) Priorité: **11.10.2001  FR 0113103**

(43) Date de publication de la demande:
**14.05.2003  Bulletin 2003/20**

(73) Titulaires:
• **ALCATEL**
**75008 Paris (FR)**
• **INRIA INSTITUT NATIONAL DE RECHERCHE EN INFORMATIQUE ET EN AUTOMATIQUE**
**Rocquencourt F-78153 Le Chesnay (FR)**

(72) Inventeurs:
• **Audouin, Olivier**
**91600 Savigny sur Orge (FR)**
• **Manzanedo, Maria**
**03600 Elda (Alicante) (ES)**

• **Noirie, Ludovic**
**91620 Nozay (FR)**
• **Penninckx, Denis**
**91620 Nozay (FR)**
• **Benveniste, Albert**
**35000 Rennes (FR)**
• **Cerou, Frederic**
**35000 Rennes (FR)**
• **Moustakides, George, IRISA - INRIA**
**35042 Rennes Cedex (FR)**

(74) Mandataire: **Sciaux, Edmond et al**
**COMPAGNIE FINANCIERE ALCATEL**
**Département Propriété Industrielle**
**54, rue La Boétie**
**75008 Paris (FR)**

(56) Documents cités:
**EP-A- 0 920 150          EP-A- 0 999 670**
**WO-A-01/20452**

**Description**

La présente invention concerne un procédé de mesure du taux d'erreur d'un système de transmission optique, ainsi qu'un dispositif pour la mise en oeuvre de ce procédé.

Les réseaux optiques sont de plus en plus utilisés à l'heure actuelle au sein des systèmes de transmission à haut débit. Les réseaux optiques fournissent en effet des fonctionnalités, telles que la commutation, qui sont transparentes, c'est-à-dire indépendantes du signal électrique transmis, et offrent donc la flexibilité requise au sein des réseaux de télécommunications actuels.

Toutefois, cette transparence nécessite de vérifier que le signal transmis est bien conforme aux exigences en termes notamment de qualité de transmission. Il est donc essentiel de disposer de moyens également transparents pour déterminer la qualité du signal transmis indépendamment notamment du format du signal, du débit de transmission et du type de modulation, afin de permettre la mesure de la qualité d'une transmission optique sur n'importe quel type de réseau, de type Backbone, Metropolitan, LAN, etc..., quels que soient le format de données (SONET, SDH, IP sur WDM, Giga-Ethernet, etc...) et le débit (622 Mbit/s, 2,5 Gbit/s, 10 Gbit/s, etc...).

En effet, il existe de nombreuses sources de dégradation du signal dans les réseaux optiques. Parmi ces sources de dégradation, on peut citer notamment l'émission spontanée des amplificateurs (ou ASE pour Amplified Spontaneous Emission en anglais), la dispersion chromatique générant des interférences entre symboles (ISI pour Inter-Symbols Interference en anglais), et la diaphonie, hors bande (liée à un canal voisin), ou dans la bande (due à une onde perturbatrice à la même longueur d'onde que celle sur laquelle on fait la mesure). A ces sources de dégradations s'ajoutent les effets non linéaires tels que les effets Kerr, Brillouin et Raman.

Le principal critère de qualité d'un réseau optique numérique est le taux d'erreur (BER pour Bit Error Rate en anglais), défini comme la probabilité de détecter à la réception un bit erroné lors de la transmission. Le signal reçu au niveau du récepteur fluctue à cause du bruit autour d'une valeur moyenne $I_1$ (si un 1 a été transmis), ou $I_0$ (si un 0 a été transmis). On suppose les deux distributions gaussiennes. La distribution du niveau 1 a donc comme paramètres $I_1$ et la variance $\sigma^2_1$, et la distribution du niveau 0 a comme paramètres $I_0$ et la variance $\sigma^2_0$. Pour décider si une valeur reçue au niveau du récepteur est correcte, il faut imposer un seuil de décision $I_D$. Le bit émis à 1 est considéré comme correct si $I>I_D$, et celui émis à 0 est considéré comme correct si $I<I_D$. En d'autres termes, une erreur a lieu lorsque $I<I_D$ pour un bit émis à 1 ou lorsque $I>I_D$ pour un bit émis à 0. Dans la pratique, $I_D$ est optimisé pour minimiser le BER.

Ainsi, le BER est ainsi défini par l'équation :

$$BER = \frac{\exp(-Q^2/2)}{Q.\sqrt{2.\pi}}$$

où Q, également appelé facteur de qualité, est donné par la relation :

$$Q = \frac{I_1 - I_0}{\sigma_0 + \sigma_1}$$

On connaît actuellement une méthode permettant de déterminer la qualité d'un signal optique indépendamment du format du signal par des mesures relatives de taux d'erreur.

Cette méthode, décrite notamment dans le document « Field Trial over 750 km long transparent WDM link using an adaptative 10 Gb/s receiver with non-intrusive monitoring capability », S. Herbst et al., OFC 2001 (papier ML2-1) est fondée sur la mesure de l'amplitude du signal électrique détecté, par comparaison au moyen d'un OU exclusif entre les décisions de deux bascules, l'une fonctionnant au seuil optimal $I_D$ (amplitude optimale à partir de laquelle le signal est considéré comme égal à 1), et l'autre fonctionnant avec un seuil d'amplitude variable. La différence entre les signaux issus des deux bascules, appelée pseudo-erreur, est enregistrée à chaque fois que les deux mesures diffèrent. En supposant une distribution Gaussienne des niveaux, l'extrapolation des courbes de taux de pseudo-erreur en fonction de la position du seuil d'amplitude variable fournit une évaluation du BER au seuil optimal.

Cette méthode est intrinsèquement transparente au format du signal transmis. Cependant, elle nécessite l'utilisation d'un circuit de récupération d'horloge ainsi que d'une ligne à retard variable pour l'ajustement de phase. Ces éléments entraînent un coût non négligeable, et de plus, limitent la transparence de la méthode étant donné qu'ils ne sont pas accordables sur une large bande de débits de signal.

Une méthode analogue est décrite dans la demande EP-A- 920150. L'échantillonnage du signal optique reçu est réalisé au rythme d'une fréquence sous-multiple de la fréquence d'horloge du signal. Le signal échantillonné obtenu est ensuite converti en un signal électrique qui est traité pour déterminer la qualité du signal. Cette méthode qui implique de disposer d'un signal d'horloge ou d'utiliser un dispositif de récupération d'horloge à partir du signal est de mise en oeuvre coûteuse.

Pour remédier à ce problème, on connaît une autre méthode, dite méthode de l'histogramme. Selon cette méthode, on applique un échantillonnage asynchrone, et donc indépendant du débit du signal, au signal transmis, puis l'on place tous les échantillons sur l'axe des amplitudes. On extrait alors l'histogramme représentant le nombre d'échantillons en fonction des amplitudes. Ensuite, après avoir éliminé les points gênants en utilisant une méthode heuristique, on effectue une estimation sur l'histogramme à l'aide de deux distributions gaussiennes pour déterminer le facteur Q puis le BER.

Cette méthode n'est toujours pas satisfaisante. En effet, elle ne permet qu'une évaluation qualitative du taux d'erreur car les résultats qu'elle fournit ne sont pas fiables.

La présente invention a donc pour but de mettre au point un procédé de mesure du taux d'erreur d'un système de transmission optique transparent non seulement au format du signal transmis, mais également au débit de transmission de ce signal, et qui nécessite la mise en oeuvre d'éléments moins onéreux que la méthode connue.

La présente invention propose à cet effet un procédé de mesure du taux d'erreur d'un signal optique transmis par un système de transmission optique comprenant les opérations suivantes :

- détection dudit signal
- échantillonnage asynchrone dudit signal, à une fréquence indépendante du débit dudit signal, pour obtenir K d'échantillons dudit signal, d'instants respectifs $t_1$ à $t_K$, K étant un entier supérieur ou égal à 2,
- calcul du diagramme de l'oeil dudit signal,
- calcul du taux d'erreur dudit signal,

ledit procédé étant caractérisé en ce qu'il comprend, après l'échantillonnage dudit signal, une opération de calcul du temps bit dudit signal, le résultat de ce calcul servant alors audit calcul du diagramme de l'oeil, puis audit calcul du taux d'erreur.

Le procédé selon l'invention permet de résoudre les problèmes posés par les procédés de l'art antérieur utilisant un échantillonnage asynchrone, à savoir l'imprécision du résultat. En effet, selon le procédé de l'invention, le temps bit est calculé de sorte que l'on obtient les mêmes avantages qu'avec un procédé synchrone utilisant un système physique de récupération d'horloge, mais que le système de récupération d'horloge n'est plus nécessaire. En outre, le procédé selon l'invention est transparent au débit de la transmission.

Grâce à l'invention, on peut reconstruire le diagramme de l'oeil sans connaissance du débit mis en jeu, c'est-à-dire sans connaissance du temps bit réel du signal optique, car on le calcule à partir du signal échantillonné de manière asynchrone.

En outre, l'échantillonnage asynchrone du signal optique après réception permet de garantir la transparence du procédé selon l'invention aux types de modulations. Cet échantillonnage asynchrone peut se faire à une fréquence très inférieure par rapport aux débits mis en jeu, ce qui signifie qu'il n'est pas synchronisé avec le signal.

Le calcul du temps bit du signal est une étape essentielle pour permettre la reconstitution du diagramme de l'oeil lorsque l'échantillonnage est effectué de manière asynchrone.

A noter que, selon l'invention, on parle de temps bit aussi bien pour le temps bit absolu que pour le temps bit relatif à la fréquence d'échantillonnage.

Selon un premier mode de réalisation du procédé de l'invention, le temps bit absolu est calculé à partir d'une valeur approchée $T_0$ connue au départ.

Pour cela, on effectue les opérations suivantes pour calculer simultanément le temps bit et le diagramme de l'oeil :

- on choisit un sous-échantillon de K/N échantillons dudit signal, N étant un entier puissance de 2,
- on sépare ce sous-échantillon en deux parties
- on calcule respectivement deux diagrammes de l'oeil à partir de chacune des parties du sous-échantillon, en utilisant la valeur $T_0$ pour le temps bit
- on calcule deux histogrammes à partir des deux diagrammes de l'oeil en discrétisant à la fois le temps et l'intensité
- on détermine la période temporelle $\delta$ séparant ces deux histogrammes
- on détermine le temps bit $T_1$ par la formule :

$$T_1 = T_0 - 2\delta\frac{T_0}{t_K}$$

- on réitère les opérations précédentes en remplaçant N par N/2, et ainsi de suite jusqu'à un sous-échantillon de K/2 échantillons.

Ce mode de réalisation est particulièrement simple et ne nécessite qu'une connaissance très approximative au départ du temps bit ; en outre, elle permet un calcul très précis du temps bit réel, très différent du temps bit connu initialement notamment du fait de l'imprécision relative à l'horloge du signal. Ce mode de réalisation permet également de reconstituer le diagramme de l'oeil.

Selon un deuxième mode de réalisation du procédé de l'invention, le temps bit relatif à la fréquence d'échantillonnage est calculé sans aucune connaissance initiale du temps bit.

Pour cela, on effectue les opérations suivantes :

- on applique une fonction non linéaire à la série des échantillons du signal, pour obtenir une série de valeurs sensiblement périodique $y_k$ pour k variant de 1 à K
- on divise cette série en M sous-séries de L éléments chacune (L et M étant des entiers)
- on calcule la transformée de Fourier discrète de chaque sous-série, qui fournit une fonction $Y_i$ pour i variant de 1 à M
- on définit la fonction périodogramme comme étant le rapport entre la somme des carrés des modules des fonctions $Y_i$ pour i variant de 1 à M, et M
- on détermine la fréquence f pour laquelle la fonction périodogramme est maximale.

Pour calculer ensuite le diagramme de l'oeil, on effectue les opérations suivantes :

- on calcule la transformée de Fourier discrète à la fréquence f de la série $y_k$, qui fournit une fonction $Z_k$ pour k variant de 1 à K
- le temps associé à chaque échantillon du signal est donné par la formule :

$$\tau_k = \frac{\arg(Z_k)}{2\pi}.$$

Selon un mode de réalisation avantageux, on calcule la transformée de Fourier sur une fenêtre glissante centrée sur $y_k$. Ceci permet d'éviter les erreurs dues à la gigue de phase cumulative de l'horloge d'échantillonnage ou du signal.

Dans ce deuxième mode de réalisation, on s'affranchit complètement de la connaissance du temps bit initiale, et on améliore la tolérance vis-à-vis de la gigue de l'horloge d'échantillonnage ou du signal.

Selon l'invention, une fois le temps bit déterminé et le diagramme de l'oeil reconstitué par l'une ou l'autre des méthodes ci-dessus, on calcule le taux d'erreur en modélisant les distributions statistiques des niveaux dudit signal au moyen de P gaussiennes, P étant un entier supérieur ou égal à 2, et de préférence égal à 8. Ce choix permet de mieux prendre en compte les niveaux déterministes résultant de l'interférence inter-symboles.

Enfin, l'invention concerne également un dispositif pour la mise en oeuvre du procédé précédent, qui comprend :

- des moyens de détection du signal
- des moyens d'échantillonnage du signal détecté à une fréquence indépendante du débit du signal
- des moyens de numérisation des échantillons obtenus en sortie des moyens d'échantillonnage
- des moyens logiciels de traitement des échantillons numérisés pour calculer le temps bit, le résultat de ce calcul servant alors à un calcul du diagramme de l'oeil relatif audit signal, puis à un calcul de taux d'erreur.

Les moyens logiciels peuvent en outre permettre de modéliser les distributions statistiques des niveaux afin de calculer le taux d'erreur du signal.

D'autres caractéristiques et avantages de la présente invention apparaîtront dans la description qui suit d'un mode de réalisation de l'invention, donné à titre illustratif et nullement limitatif.

Dans les figures suivantes :

- la figure 1 représente l'architecture d'un dispositif de mesure du taux d'erreur d'un système de transmission optique, mettant en oeuvre le procédé selon l'invention,
- la figure 2 représente un « diagramme de l'oeil » typique d'un signal optique.

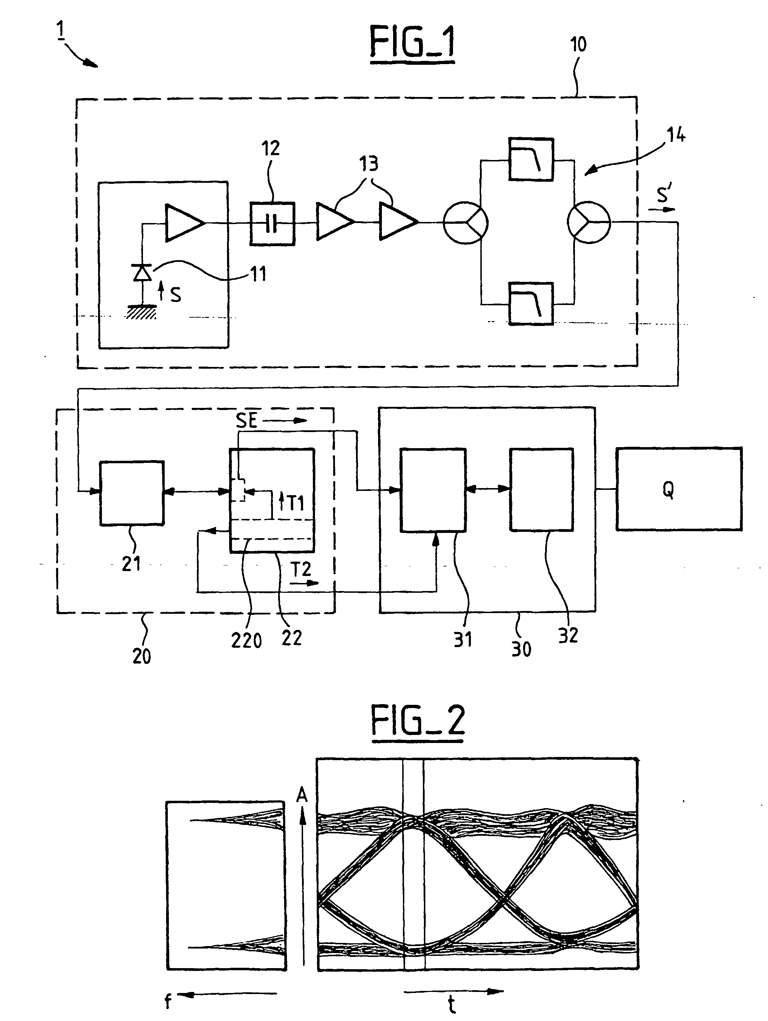

On voit en figure 1 l'architecture d'un dispositif 1 de mesure du taux d'erreur d'un système de transmission optique mettant en oeuvre le procédé selon l'invention, que l'on va maintenant décrire en regard de cette figure, dans ses deux modes de réalisation.

Le signal optique S est reçu au sein d'un récepteur 10. Ce récepteur 10 comprend une photodiode PIN 11 qui transforme le flux optique en tension. Un module hyperfréquence 12 permet ensuite de supprimer la composante continue du signal électrique provenant de la photodiode 11. Le signal électrique issu du module 12 est ensuite amplifié au moyen de deux amplificateurs 13, puis filtré au moyen d'un filtre 14. Le filtrage effectué par le filtre 14 doit être bien adapté au débit afin de garantir un bon rapport signal à bruit à l'entrée de l'échantillonneur 20.

Le signal électrique amplifié et filtré S' est ensuite échantillonné de manière asynchrone au sein de l'échantillonneur 20. Ce dernier comprend une tête d'échantillonnage 21 qui échantillonne le signal d'entrée à une fréquence d'horloge donnée, par exemple de 50 kHz. En sortie de la tête d'échantillonnage 21, on a donc un signal analogique qui peut être assimilé à une série de réponses impulsionnelles. Chaque réponse impulsionnelle a une amplitude qui dépend directement de l'amplitude du signal d'entrée dans la tête d'échantillonnage 21.

Comme on le voit sur la figure 1, la tête d'échantillonnage 21 est reliée à des moyens 22 internes à l'échantillonneur 20 qui lui fournissent, via un câble (non représenté), l'alimentation nécessaire, ainsi que le signal de déclenchement T1 donnant l'ordre d'échantillonnage du signal d'entrée. Ce signal T1 est généré par une base de temps interne 220 des moyens 22.

Le signal analogique impulsionnel SE issu de la tête d'échantillonnage 21 est ensuite numérisé au sein d'un PC 30 par une carte de numérisation 31. La base de temps interne 220 fournit également le signal de déclenchement T2 à la carte de numérisation 31.

Les données numérisées sont ensuite enregistrées au sein du PC 30 puis traitées selon l'invention par un logiciel 32. Ce traitement est effectué en trois parties : une première partie consiste à récupérer le temps bit, une deuxième partie à reconstituer le diagramme de l'oeil et une troisième partie à déterminer le taux d'erreur, et donc le facteur de qualité, à partir du diagramme de l'oeil reconstitué.

Ces trois étapes vont être décrites en détail ci-après pour chacun des deux modes de réalisation du procédé selon l'invention.

## 1$^{ER}$ MODE DE REALISATION

### 1$^{ère}$ partie : Récupération du temps bit et calcul du diagramme de l'oeil

Cette étape revient en fait à effectuer une récupération d'horloge logicielle, ce qui évite l'utilisation d'un circuit de récupération d'horloge onéreux et non transparent en termes de débit de transmission.

Dans ce premier mode de réalisation de l'invention, le temps bit absolu est calculé à partir d'une valeur approchée $T_0$ connue au départ.

Pour cela, on prend un sous-échantillon $\tilde{E}$ parmi l'ensemble des échantillons $x_k$, k variant de 1 à K, du signal échantillonné SE issu de la tête d'échantillonnage 21. Ce sous-échantillon comprend K/N éléments, N étant un entier puissance de 2 (typiquement 32 ou 64).

On sépare ce sous-échantillon $\tilde{E}$ en deux parties $\tilde{E}_1$ et $\tilde{E}_2$.

On calcule le diagramme de l'oeil de chacune de ces deux parties en utilisant la valeur $T_0$ pour le temps bit, le diagramme de l'oeil représentant l'amplitude en fonction du temps de chaque échantillon des parties respectives $\tilde{E}_1$ et $\tilde{E}_2$.

A partir de ces deux diagrammes de l'oeil, on construit deux histogrammes $H_1$ et $H_2$ en discrétisant à la fois le temps et l'intensité. Ces deux histogrammes sont identiques à une période temporelle $\delta$ près.

Soient $N_1$ et $N_2$ les tailles communes de ces deux histogrammes sur les axes respectifs du temps et de l'intensité. On a, pour i variant de 0 à $N_1$ :

$$C(i) = \sum_{j=1}^{N_1} \sum_{k=1}^{N_2} \left| H_1((i+j) \bmod N_1, k) - H_2(j, k) \right|^2 .$$

On détermine alors $i_0$ tel que $C(i_0)$ est la valeur maximale des $C(i)$, et si $i_0$ est supérieur à $N_1/2$, on a : $i_0 = i_0 - N_1$, et :

$$\delta = i_0 {}^* T_0 / t_K.$$

Ensuite, on détermine le temps bit $T_1$ par la formule :

$$T_1 = T_0 - 2\delta\frac{T_0}{t_K}.$$

Les opérations précédentes sont réitérées en remplaçant N par N/2, et ainsi de suite jusqu'à un sous-échantillon de K/2 échantillons.

On obtient alors une estimation très précise du temps bit, qui permet de s'affranchir de l'incertitude sur la valeur initialement connue $T_0$.

A noter que pour estimer de très faibles perturbations du temps bit, il est possible de n'appliquer les opérations précédentes qu'une seule fois, pour N = 1.

Grâce à cette méthode, on effectue simultanément la récupération du temps bit et la reconstitution du diagramme de l'oeil. Il ne reste plus ensuite qu'à déterminer le taux d'erreur.

La connaissance de l'information relative au temps bit permet la détermination de la phase de chacun des échantillons et donc la reconstitution du diagramme de l'oeil.

On rappelle que le diagramme de l'oeil correspond à une représentation de toutes les transitions possibles d'un signal optique (plus précisément du signal électrique obtenu en sortie de la diode PIN) et ce sur une période du signal, c'est-à-dire sur un temps bit. Le diagramme obtenu, qui donne l'amplitude du signal optique en fonction du temps modulo $T_0$, est représenté sur la figure 2. Il est qualifié de « diagramme de l'oeil » du fait de la forme d'oeil de la courbe obtenue.

### 2<sup>ème</sup> partie : Détermination du taux d'erreur BER

Le diagramme de l'oeil correspondant à une transmission optique en présence d'une dégradation du signal, par exemple d'émission spontanée amplifiée (ASE), mais sans interférence entre symboles (ISI), rend compte de l'élargissement des traces sur les niveaux « 1 » et « 0 ». On associe ainsi à chaque niveau une distribution des amplitudes : histogrammes d'amplitude pour chacune des distributions statistiques des deux niveaux. La figure 2 montre, en regard du diagramme de l'oeil d'un tel signal, les histogrammes des fréquences d'amplitude associés.

La fonction de densité de probabilité pour chacun des deux niveaux déterministes 1 et 0 est gaussienne. Ainsi, à chacun des deux niveaux, on associe un écart type et une valeur moyenne. A partir de ces paramètres, on détermine le taux d'erreur BER, qui, comme on l'a vu plus haut, est directement lié au facteur de qualité Q par une relation connue.

En présence du phénomène d'interférences entre symboles, les impulsions optiques, par élargissement temporel dû par exemple à la dispersion chromatique, peuvent se superposer en amplitude. Dans ce cas, il est préférable de remplacer le modèle à deux gaussiennes décrit ci-dessus par un modèle à huit gaussiennes pour la détermination du taux d'erreur et du facteur Q selon l'invention. En effet, on prend en compte des interférences entre le bit antérieur et le bit postérieur par rapport à un bit donné, ce qui conduit à 8 niveaux déterministes (4 pour le niveau 1 et 4 pour le niveau 0), à chacun desquels on peut associer une gaussienne.

On peut estimer les paramètres (moyenne et variance) de ces 8 gaussiennes en appliquant l'algorithme bien connu dit « Expectation-Maximization » (EM). Cet algortihme est décrit par exemple dans « Maximum Likelihood for Incomplete Data via the EM Algorithm (with discussion) », Dempster, A.P. Laird, N.M. and Rubin, D. B. (1977), Journal of the Royal Statistics Society, B, 39, 1-38, et ne sera pas décrit plus en détail ici.

En pratique, le diagramme de l'oeil est découpé en N intervalles. Pour chacun de ces intervalles, on calcule une approximation du facteur Q fondée sur les valeurs des intensités des échantillons du diagramme de l'oeil. Si Y est l'ensemble des valeurs des intensités d'un intervalle donné, soit $M_1$ une valeur médiane de l'ensemble Y. $Y_0^+$ est le sous-ensemble des valeurs supérieures à $M_1$, et $Y_0^-$ celui des valeurs inférieures à $M_1$.

On calcule alors $m_0^+$, moyenne des $Y_0^+$, et $m_0^-$, moyenne des $Y_0^-$.

Ensuite, on définit $Y^+$ comme le sous-ensemble de Y tel que :

$$|y-m_0^+|\leq|y-m_0^-|,$$

et $Y^-$ comme le sous ensemble de Y tel que :

$$|y-m_0^+|>|y-m_0^-|.$$

Enfin, on calcule $m^+$ et $\sigma^+$, la moyenne et l'écart-type de $Y^+$, et $m^-$ et $\sigma^-$, la moyenne et l'écart-type de $Y^-$.

On obtient alors l'estimée du facteur Q pour l'intervalle donné par la formule :

$$Q = \frac{m^+ - m^-}{\sigma^+ + \sigma^-}$$

Ce calcul conduit à un ensemble de valeurs Q(j) pour j variant de 0 à N, et l'on détermine $j_0$ donnant la valeur maximale de Q(j). Ceci permet de déterminer la tranche centrale du diagramme de l'oeil.

Ensuite, on évalue le taux d'erreur par la modélisation à 8 gaussiennes sur chacune des tranches se trouvant de part et d'autre de la tranche centrale, les moyennes et variances étant toujours estimées selon l'algorithme EM mentionné ci-dessus. Le taux d'erreur minimum ainsi déterminé correspond au facteur Q optimum.

Le facteur de qualité ou facteur Q est directement lié au taux d'erreur BER par la relation rappelée plus haut. En pratique, la méthode à 8 gaussiennes permet de calculer directement le taux d'erreur, et l'on déduit de ce taux d'erreur le facteur Q équivalent par la relation rappelée plus haut.

### 2<u>EME</u> MODE DE REALISATION

**1<sup>ère</sup> partie : Récupération du temps bit et calcul du diagramme de l'oeil**

Dans ce deuxième mode de réalisation de invention, le temps bit relatif à la fréquence d'échantillonnage est calculé sans aucune connaissance initiale du temps bit. Ce temps bit relatif à la fréquence d'échantillonnage est suffisant pour reconstituer le diagramme de l'oeil.

Pour cela, on applique tout d'abord une fonction non linéaire à la série des échantillons $x_k$ du signal, pour obtenir une série de valeurs sensiblement périodique (c'est-à-dire où l'élément périodique est renforcé) $y_k$ pour k variant de 1 à K. On a par exemple :

$$y_k = \left| x_k - \bar{x} \right|^p , \text{ où } \bar{x} = \frac{1}{K} \sum_{k=0}^{K-1} x_k .$$

On divise la série ainsi obtenue en M sous-séries de L éléments chacune (L et M étant des entiers).

Ensuite, on calcule la transformée de Fourier discrète de chaque sous-série, qui fournit une fonction $Y_i$ pour i variant de 1 à M :

$$Y_i(e^{j\omega}) = \sum_{k=0}^{L-1} y_{iL+k} \cdot e^{-jk\omega} .$$

On définit alors la fonction périodogramme $P(e^{j\omega})$ comme étant le rapport entre la somme des carrés des modules des fonctions $Y_i$ pour i variant de 1 à M, et M.

On détermine la fréquence f comme étant celle pour laquelle la fonction périodogramme est maximale.

Cet algorithme selon l'invention pour la récupération du temps bit relatif à la fréquence d'échantillonnage permet, grâce à l'utilisation d'une fenêtre glissante, d'éviter les erreurs dues à la gigue de phase cumulative de l'horloge d'échantillonnage ou du signal. On rappelle que la gigue de phase de l'horloge est l'incertitude quant aux instants d'échantillonnage, qui entraîne une accumulation de l'erreur temporelle sur chaque échantillon. Le gigue de phase du signal est inhérente au signal lui-même.

Ensuite, pour calculer le diagramme de l'oeil, on calcule la transformée de Fourier discrète à la fréquence f de la série $y_k$, qui fournit une fonction $Z_k$, pour k variant de 1 à K. Pour cela, on effectue la somme de Fourier sur 2F+1 points centrés sur l'échantillon $y_k$. On utilise donc une fenêtre glissante centrée sur $y_k$ en fonction de l'échantillon.

Le temps associé à chaque échantillon $x_k$ du signal est alors donné par la formule :

$$\tau_k = \frac{\arg(Z_k)}{2\pi}.$$

Le diagramme de l'oeil est ensuite aisé à former : l'échantillon $x_k$ se trouve à la position $(\tau_k, x_k)$.

Cet algorithme selon l'invention pour la récupération du temps bit relatif à la fréquence d'échantillonnage et la reconstitution du diagramme de l'oeil permet, grâce à l'utilisation d'une fenêtre glissante, d'éviter les erreurs dues à la gigue de phase cumulative de l'horloge d'échantillonnage ou du signal. On rappelle que la gigue de phase de l'horloge est l'incertitude quant aux instants d'échantillonnage, qui entraîne une accumulation de l'erreur temporelle sur chaque échantillon. Le gigue de phase du signal est inhérente au signal lui-même.

**2$^{\text{ème}}$ partie : Détermination du taux d'erreur BER**

On peut appliquer ici exactement la même méthode que celle décrite en relation avec le premier mode de réalisation.

Bien entendu, invention n'est pas limitée au mode de réalisation qui vient d'être décrit. Ainsi, on peut réaliser un double échantillonnage avec un décalage temporel de l'ordre du temps bit entre les deux signaux échantillonnés au lieu d'un simple échantillonnage.

Enfin, on pourra remplacer tout moyen par un moyen équivalent sans sortir du cadre de l'invention.

**Revendications**

1. Procédé de mesure du taux d'erreur d'un signal optique transmis par un système de transmission optique, comprenant les opérations suivantes :

   - détection dudit signal,
   - échantillonnage asynchrone dudit signal, à une fréquence indépendante du débit dudit signal, pour obtenir K d'échantillons dudit signal, d'instants respectifs $t_1$ à $t_K$, K étant un entier supérieur ou égal à 2,
   - calcul du diagramme de l'oeil dudit signal,
   - calcul du taux d'erreur dudit signal,

   ledit procédé étant **caractérisé en ce qu'**il comprend, après l'échantillonnage dudit signal, une opération de calcul du temps bit dudit signal, le résultat de ce calcul servant alors audit calcul du diagramme de l'oeil, puis audit calcul du taux d'erreur.

2. Procédé selon la revendication 1 **caractérisé en ce que** le temps bit absolu est calculé à partir d'une valeur approchée $T_0$ connue au départ.

3. Procédé selon la revendication 2 **caractérisé en ce que** le calcul simultané du temps bit et du diagramme de l'oeil comporte les opérations suivantes :

   - on choisit un sous-échantillon de K/N échantillons dudit signal, N étant un entier puissance de 2,
   - on sépare ce sous-échantillon en deux parties
   - on calcule respectivement deux diagrammes de l'oeil à partir de chacune des parties du sous-échantillon, en utilisant la valeur T0 pour le temps bit
   - on calcule deux histogrammes à partir des deux diagrammes de l'oeil en discrétisant à la fois le temps et l'intensité
   - on détermine la période temporelle $\delta$ séparant ces deux histogrammes
   - on détermine le temps bit T1 par la formule :

$$T_1 = T_0 - 2\delta\frac{T_0}{t_K}$$

   - on réitère les opérations précédentes en remplaçant N par N/2, et ainsi de suite jusqu'à un sous-échantillon de K/2 échantillons.

4. Procédé selon la revendication 1 **caractérisé en ce que** le calcul du temps bit relatif à la fréquence d'échantillonnage comporte les opérations suivantes :

   - on applique une fonction non linéaire à la série des échantillons du signal, pour obtenir une série de valeurs sensiblement périodique $y_k$ pour k variant de 1 à K
   - on divise cette série en M sous-séries de L éléments chacune (L et M étant des entiers)
   - on calcule la transformée de Fourier discrète de chaque sous-série, qui fournit une fonction $Y_i$ pour i variant

de 1 à M

- on définit la fonction périodogramme comme étant le rapport entre -la somme des carrés des modules des fonctions $Y_i$ pour i variant de 1 à M, et M
- on détermine la fréquence f pour laquelle la fonction périodogramme est maximale.

5. Procédé selon la revendication 4 **caractérisé en ce que**, pour calculer le diagramme de l'oeil, on effectue les opérations suivantes :

- on calcule la transformée de Fourier discrète à la fréquence f de la série $y_k$, qui fournit une fonction $Z_k$ pour k variant de 1 à K
- le temps associé à chaque échantillon du signal est donné par la formule :

$$\tau_k = \frac{\arg(Z_k)}{2\pi}.$$

6. Procédé selon la revendication 5 **caractérisé en ce que** l'on calcule la transformée de Fourier sur une fenêtre glissante centrée sur $y_k$.

7. Procédé selon l'une des revendications 1 à 6 **caractérisé en ce que** l'on calcule le taux d'erreur en modélisant les distributions statistiques des niveaux dudit signal au moyen de P gaussiennes, P étant un entier supérieur ou égal à 2, et de préférence égal à 8.

8. Procédé selon la revendication 7 **caractérisé en ce que**, lorsque P est égal à 8, on estime les moyenne et variance des 8 gaussiennes en appliquant l'algorithme dit « Expectation-Maximization » (EM).

9. Dispositif de mesure du taux d'erreur d'un signal optique transmis par un système de transmission optique, **caractérisé en ce qu'**il comprend :

- des moyens (10) de détection d'un signal (S) ayant été transmis par système de transmission optique
- des moyens (20) d'échantillonnage dudit signal détecté (S') à une fréquence indépendante du débit dudit signal
- des moyens de numérisation (31) des échantillons (SE) obtenus en sortie desdits moyens d'échantillonnage (20)
- des moyens logiciels (32) de traitement desdits échantillons numérisés pour calculer ledit temps bit, le résultat de ce calcul servant alors à un calcul du diagramme de l'oeil relatif audit signal, puis à un calcul de taux d'erreur.

10. Dispositif selon la revendication 9 **caractérisé en ce que** lesdits moyens logiciels (32) permettent en outre de modéliser les distributions statistiques des niveaux du signal afin de calculer le taux d'erreur du signal.

**Patentansprüche**

1. Fehlerratenmessungsverfahren eines von einem optischen Übertragungssystem übertragenen optischen Signals vor, aufweisend die folgenden Schritte:

- Erkennung des Signals
- asynchrone Abtastung des Signals mit einer von der Übertragungsgeschwindigkeit des Signals unabhängigen Frequenz, um K Abtastwerte des Signals für Zeitpunkte von $t_1$ bis $t_K$ zu erhalten, wobei K eine ganze Zahl größer oder gleich 2 ist;
- Berechnung des Augendiagramms des Signals;
- Berechnung der Fehlerrate des Signals;

wobei das Verfahren **dadurch gekennzeichnet ist, dass** es nach der Abtastung des Signals einen Schritt zur Berechnung der Bitdauer des Signals umfasst,
wobei das Ergebnis dieser Berechnung anschließend zur Berechnung des Augendiagramms und danach zur Berechnung der Fehlerrate dient.

2. Verfahren nach Anspruch 1, **dadurch gekennzeichnet, dass** die absolute Bitdauer ausgehend von einem zu

Anfang bekannten Näherungswert $T_0$ berechnet wird.

3. Verfahren nach Anspruch 2, **dadurch gekennzeichnet, dass** die gleichzeitige Berechnung der Bitdauer und des Augendiagramms die folgenden Schritte aufweist:

- man wählt eine Unterabtastung von K/N Abtastwerten des Signals, wobei N eine Quadratzahl ist;
- man teilt diese Unterabtastung in zwei Teile;
- man berechnet jeweils zwei Augendiagramme ausgehend von jedem der Teile der Unterabtastung unter Verwendung des Wertes $T_0$ für die Bitdauer;
- man berechnet zwei Histogramme ausgehend von den zwei Augendiagrammen, wobei gleichzeitig die Zeit und die Intensität diskretisiert werden;
- man bestimmt die Zeitperiode $\delta$, welche diese beiden Histogramme trennt;
- man bestimmt die Bitdauer $T_1$ mit der Formel:

$$T_1 = T_0 - 2\delta\frac{T_0}{t_K}$$

- man wiederholt die vorhergehenden Schritte, indem N durch N/2 ersetzt wird, und so weiter, bis zu einer Unterabtastung von K/2 Abtastwerten.

4. Verfahren nach Anspruch 1, **dadurch gekennzeichnet, dass** die Bitdauer bezogen auf die Abtastungsfrequenz die folgenden Schritte umfasst:

- man wendet eine nichtlineare Funktion auf die Reihe der Signalabtastwerte an, um eine Reihe von im Wesentlichen periodischen Werten $y_k$ zu erhalten, wobei k zwischen 1 und K schwankt;
- man teilt diese Reihe in M Unterreihen von jeweils L Elementen (L und M sind ganze Zahlen);
- man berechnet die diskrete Fourier-Transformation für jede Unterreihe, die eine Funktion $Y_i$ liefert, wobei i zwischen 1 und M schwankt;
- man definiert die Periodogramm-Funktion als das Verhältnis zwischen der Summe der Modulquadrate der Funktionen $Y_i$, mit i schwankend zwischen 1 und M, und M;
- man bestimmte die Frequenz f, für welche die Periodogramm-Funktion maximal ist.

5. Verfahren nach Anspruch 4, **dadurch gekennzeichnet, dass** zur Berechnung des Augendiagramms die folgenden Schritte ausgeführt werden:

- man berechnet die diskrete Fourier-Transformation mit der Frequenz f der Reihe $y_k$, die eine Funktion $Z_k$ liefert, wobei k zwischen 1 und K schwankt;
- die jedem Abtastwert des Signals zugeordnete Zeitdauer ist gegeben durch die Formel:

$$\tau_k = \frac{\arg(Z_1)}{2\pi}$$

6. Verfahren nach Anspruch 5, **dadurch gekennzeichnet, dass** die Fourier-Transformation über ein auf $y_k$ zentriertes gleitendes Fenster berechnet wird.

7. Verfahren nach einem der Ansprüche 1 bis 6, **dadurch gekennzeichnet, dass** die Fehlerrate berechnet wird, indem man die statistischen Verteilungen der Signalpegel mit Hilfe von P Gauß-Verteilungen modelliert, wobei P eine ganze Zahl größer oder gleich 2 ist und vorzugsweise gleich 8.

8. Verfahren nach Anspruch 7, **dadurch gekennzeichnet, dass** dann, wenn P gleich 8 ist, Mittelwert und Varianz der 8 Gauß-Verteilungen abgeschätzt werden, indem man den so genannten "Expectation-Maximization"-Algorithmus (EM-Algorithmus) anwendet.

9. Vorrichtung zur Fehlerratenmessung eines von einem optischen Übertragungssystem übertragenen Signals, aufweisend:

- Einrichtungen (10) zur Erkennung eines Signals (S), das von einem optischen Übertragungssystem übertragen wurde;
- Einrichtungen (20) zur Abtastung des erkannten Signals (S') mit einer von der Übertragungsgeschwindigkeit des Signals unabhängigen Frequenz;
- Einrichtungen (31) zur Digitalisierung der erhaltenen Abtastwerte (SE) am Ausgang der Abtasteinrichtungen (20);
- Software-Einrichtungen (32) zur Verarbeitung der digitalisierten Abtastwerte zur Berechnung der Bitdauer, wobei das Ergebnis dieser Berechnung anschließend zu einer Berechnung des auf dieses Signal bezogenen Augendiagramms und danach zu einer Berechnung der Fehlerrate dient.

**10.** Vorrichtung nach Anspruch 9, **dadurch gekennzeichnet, dass** die Software-Einrichtungen (32) außerdem eine Modellierung der statistischen Verteilungen der Pegel ermöglichen, um die Fehlerrate des Signals zu berechnen.

**Claims**

**1.** A method of measuring the error rate of an optical signal transmitted by an optical transmission system, said method comprising the following operations:

- detecting said signal,
- asynchronously sampling said signal at a frequency independent of the bit rate of said signal to obtain K samples of said signal at respective times $t_1$ to $t_K$ where K is an integer greater than or equal to 2,
- computing the eye diagram of said signal, and
- computing the error rate of said signal,

which method is **characterized in that**, after sampling said signal, it further comprises an operation of computing the bit time of said signal, the result of said computation being used in computing the eye diagram, and then in computing the error rate.

**2.** A method according to claim 1, **characterized in that** the absolute bit time is computed from an approximate value $T_0$ known initially.

**3.** A method according to claim 2, **characterized in that** simultaneous computation of the bit time and the eye diagram comprises the following operations:

- choosing a sub-sample of K/N samples of said signal where N is an integer power of 2,
- separating said sub-sample into two parts,
- computing two eye diagrams from the respective parts of the sub-sample using the value $T_0$ for the bit time,
- computing two histograms from the two eye diagrams by digitizing the time and the intensity,
- determining the time period $\delta$ between the two histograms,
- determining the bit time $T_1$ from the equation:

$$T_1 = T_0 - 2\delta\frac{T_0}{t_k}, \text{ and}$$

- repeating the above operations substituting N/2 for N until a sub-sample of K/2 samples is obtained.

**4.** A method according to claim 1, **characterized in that** computing the bit time relating to the sampling frequency comprises the following operations:

- applying a non-linear function to the series of samples of the signal to obtain a series of substantially periodic values $y_k$ for $\underline{k}$ varying from 1 to K,
- dividing the series into M sub-series each of L elements where L and M are integers,
- computing the discrete Fourier transform of each sub-series, which yields a function $Y_i$ for $\underline{i}$ varying from 1 to M,
- defining a periodogram function as the ratio with respect to M of the sum of the squares of the moduli of the functions $Y_i$ for $\underline{i}$ varying from 1 to M, and
- determining the frequency $\underline{f}$ which maximizes the periodogram function.

5. A method according to claim 4, **characterized in that**, to compute the eye diagram, the following operations are effected:

- computing the discrete Fourier transform at the frequency $\underline{f}$ of the series $y_k$, which yields a function $Z_k$ for $\underline{k}$ varying from 1 to K, and
- obtaining the time associated with each sample of the signal from the equation:

$$\tau_k = \frac{\arg(Z_k)}{2\pi}$$

6. A method according to claim 5, **characterized in that** the Fourier transform is computed over a sliding window centered on $y_k$.

7. A method according to any one of claims 1 to 6, **characterized in that** the error rate is computed by modeling the statistical distributions of the levels of said signal by means of P Gaussian distributions where P is an integer greater than or equal to 2 and preferably equal to 8.

8. A method according to claim 7, **characterized in that** when P is equal to 8 the average and the variance of the eight Gaussian distributions are estimated by applying the expectation-maximization (EM) algorithm.

9. Apparatus for measuring the error rate of an optical signal transmitted by an optical transmission system, which apparatus is **characterized in that** it includes:

- means (10) for detecting a signal (S) that has been transmitted by the optical transmission system,
- means (20) for sampling said detected signal (S') at a frequency independent of the bit rate of said signal,
- means (31) for digitizing samples (SE) obtained at the output of said sampling means (20), and
- software (32) for processing said digitized samples to compute said bit time, the result of said computation being used in computing the eye diagram relative to said signal, and then in computing the error rate.

10. Apparatus according to claim 9, **characterized in that** said software (32) also models the statistical distributions of the levels of the signal in order to compute the error rate of the signal.

## FIG_1

## FIG_2